**Europäisches Patentamt**

**European Patent Office**

**Office européen des brevets**

(19)

(11) Numéro de publication: **0130919 B1**

---

(12) **FASCICULE DE BREVET EUROPEEN**

(45) Date de publication du fascicule du brevet:
**20.04.88**

(51) Int. Cl.⁴: **F 16 L 41/02**, B 05 B 7/14, B 05 B 1/14

(21) Numéro de dépôt: **84401401.9**

(22) Date de dépôt: **03.07.84**

---

(54) **Dispositif de distribution de produits pulvérulents en suspension dans un gaz.**

---

(30) Priorité: **04.07.83 FR 8311059**

(43) Date de publication de la demande:
**09.01.85 Bulletin 85/2**

(45) Mention de la délivrance du brevet:
**20.04.88 Bulletin 88/16**

(84) Etats contractants désignés:
**AT BE CH DE FR GB IT LI LU NL SE**

(56) Documents cités:
**EP - A - 0 006 064
DE - A - 2 950 283
FR - A - 2 475 649
US - A - 3 640 472**

(73) Titulaire: **SAINT-GOBAIN VITRAGE, Les
Miroirs 18, avenue d'Alsace, F-92400 Courbevoie (FR)**

(72) Inventeur: **Le Marrec, Claude, 84 rue du Bac,
F-92600 Asnieres (FR)**
Inventeur: **Kramer, Carl, Am Chorusberg 8,
D-5100 Aachen (DE)**
Inventeur: **Kuster, Hans Werner, Augustastrasse 68,
D-5100 Aachen (DE)**

(74) Mandataire: **Leconte, Jean-Gérard, Saint-Gobain
Recherche 39, Quai Lucien Lefranc,
F-93304 Aubervilliers Cedex (FR)**

---

**Description**

La présente invention se rapporte à la distribution de produits pulvérulents et elle concerne plus précisément la subdivision d'une veine principale unique de produits pulvérulents en suspension dans un gaz en une pluralité de veines secondaires en vue notamment d'alimenter en différents endroits de sa longueur une buse à fente pour revêtier un substrat tel que des plaques ou un ruban de verre.

Le brevet EP-A 000 6064 décrit une installation de revêtement de verre dans laquelle une buse à fente distribue aussi régulièrement que possible une poudre d'un composé métallique sur un ruban de verre chaud qui défile sous elle, en vue d'obtenir après pyrolyse de la poudre au contact du verre chaud, une couche de revêtement à propriétés optiques ou électriques particulières. Cette buse est alimentée sur toute sa longueur par une pluralité de conduits d'alimentation qui résultent de la division par exemple par bifurcations en série d'une canalisation unique d'amenée de la poudre en suspension dans un gaz, en provenance d'un réservoir à poudre.

Les moyens classiques de subdivision de la canalisation unique en une pluralité de conduits secondaires donnent généralement satisfaction, cependant quand le nombre de conduits secondaires devient trop important, par exemple lorsqu'il s'agit d'alimenter une buse à fente couvrant les trois ou quatre mètres de largeur d'un ruban de verre fabriqué industriellement et, que l'on requiert en plus une très grande uniformité de distribution, ces moyens classiques peuvent s'avérer insuffisants, en particulier ils introduisent des pertes de charge trop importantes et ont tendance à s'encrasser et à se déstabiliser.

C'est ainsi que le document DE-A 2 950 283 décrit, dans un autre domaine, celui du traitement d'un mélange de gaz et de liquides, un dispositif opérant la subdivision d'une alimentation unique en une pluralité de conduites secondaires, cependant en nombre restreint, à l'aide d'un système de canaux formés sur une surface conique et aboutissant aux conduites secondaires disposées dans une direction approximativement perpendiculaire. Un tel dispositif dans le domaine des mélanges de poudres et de gaz serait totalement inutilisable, en particulier à cause de la perte de charge importante résultant du changement de direction important des conduites secondaires et également de l'encrassement qui naitrait à ce niveau.

C'est ainsi également que le document FR 2 475 649 décrit la subdivision d'une conduite unique en un nombre restreint (5 ou 10) de conduites secondaires.

L'invention a pour objectif d'améliorer la distribution de produits pulvérulents en fournissant le moyen de diviser une veine unique desdits produits pulvérulents en suspension dans un gaz en un nombre éventuellement très important de veines secondaires identiques, en vue notamment d'alimenter des buses à fente de grandes dimensions pour revêtir de façon uniforme des substrats de grande largeur.

Pour cela, elle propose une installation de distribution de poudre telle qu'exposée dans la revendication 1.

Pour éviter l'encrassement et permettre la conservation de la concentration de la suspension, l'angle au sommet du cône est faible et de préférence inférieur à 25° et même 22°. Toujours pour éviter l'encrassement à l'intérieur du répartiteur, la section de passage est au maximum conservée, dans la canalisation principale, au moment de se subdiviser en une pluralité de canaux identique et tout le long de ces canaux et avantageusement, notamment pour des questions de commodité de réalisation, cette section de passage est strictement conservée.

Dans un premier mode de réalisation, les canaux sont de section circulaire et sont obtenus par perçage au travers du volume.

Dans un second mode de réalisation préféré, le répartiteur est constitué d'un boitier ayant un évidement globalement en forme de tronc de cône dont l'entrée au travers de sa petite base communique avec la canalisation principale unique et également d'un noyau en forme de cône engagé dans l'évidement en forme de tronc de cône du boitier, avec la pointe du cône affleurant le niveau de la petite base du tronc de cône, la paroi latérale du noyau conique comportant une pluralité de cannelures identiques orientées suivant les génératrices du cône, lesdits cannelures formant avec la surface interne du boitier, le faisceau de canaux identiques.

Avantageusement ces répartiteurs sont montés verticalement pour éviter l'action inégalement répartie de la pesanteur.

Ces répartiteurs sont utilisés pour diviser une veine unique d'un fluide gazeux ou liquide, d'une suspension solide ou liquide, en une pluralité de veines secondaires identiques, notamment pour traiter des feuilles ou un ruban continu de verre.

En particulier, une suspension d'une poudre, par exemple d'un composé métallique dans un gaz, ainsi subdivisée, peut servir à alimenter en différents endroits de sa longueur une buse à fente destinée à revêtir un substrat, notamment un ruban de verre, d'une couche dudit composé ou d'un produit résultant de la décomposition dudit composé.

Grâce au répartiteur objet de l'invention, on évite d'une part les modifications de direction trop brusques de la suspension à véhiculer, pouvant entrainer des ségrégations, des encrassements, des modifications de la concentration de la suspension, d'autre part les pertes de charge importantes conduisant à des pertes de vitesse et à des encrassements.

Il en résulte une amélioration de l'uniformité de distribution de la suspension dans le temps et dans l'espace qui conduit à une meilleure qualité des substrats revêtus par cette suspension distribuée par exemple par une buse à fente.

L'invention sera maintenant décrite plus en détail en référence aux figures jointes qui représentent:

Fig. 1: une vue schématique générale d'une installation de revêtement d'un substrat à l'aide d'une poudre, ayant une buse à fente alimentée par une pluralité de conduits issus d'un répartiteur.

Fig. 2: une vue en perspective, partiellement en coupe, du mélangeur destiné à la réalisation de la suspension de poudre dans un gaz.

Fig. 3: une première variante de répartiteur pour la subdivision d'une canalisation unique d'admission en une pluralité de conduits.

Fig. 3A: une vue en coupe

Fig. 3B: une vue de dessous

Fig. 4: une seconde variante de répartiteur pour la subdivision d'une canalisation unique d'admission en une pluralité de conduits.

Fig. 5: une vue de côté du noyau contenu à l'intérieur du répartiteur de la fig. 4.

Fig. 6: une vue de dessus du noyau de la fig. 5.

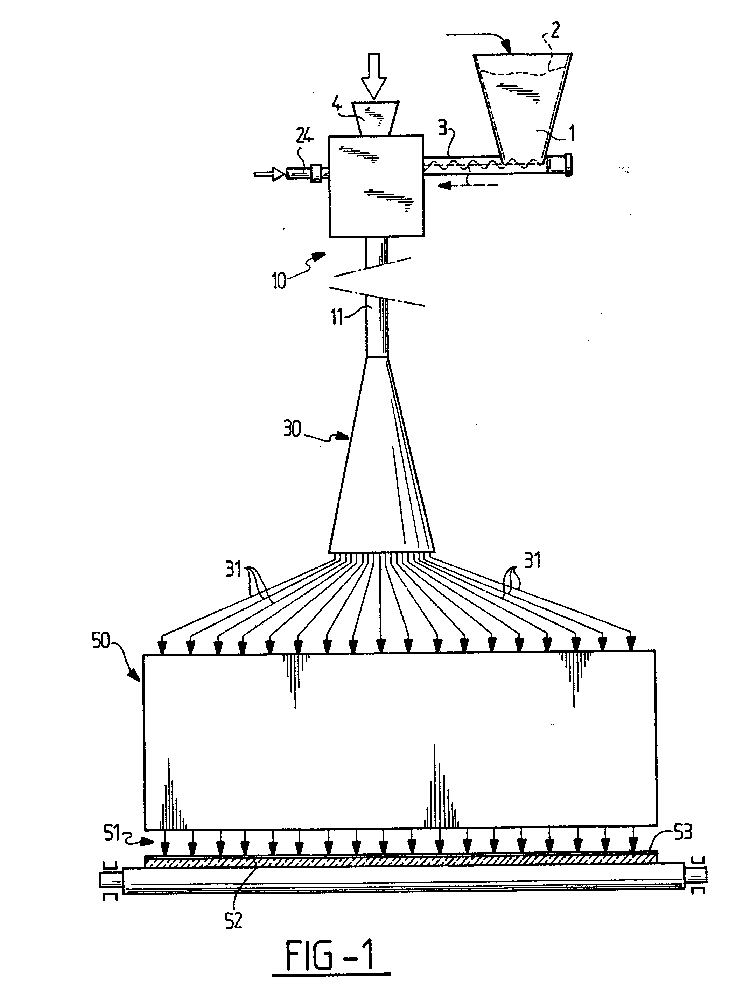

L'installation décrite ci-dessous et montrée dans son ensemble fig. 1, permet de distribuer des poudres diverses (composés organométalliques, encres, pigments, ...) de façon régulière sur des substrate divers tels que verre, métal, bois, papier, etc...

Elle peut en particulier être utilisée pour distribuer un composé métallique pulvérulent sur un substrat en verre défilant à vitesse uniforme sous elle, en vue de le revêtir d'une couche à propriétés optiques, électriques, décoratives particulières, résultant de la décomposition thermique du composé métallique au contact du verre, porté à haute température dans ce but.

Les couches généralement déposées sur le verre sont des couches à base d'étain, d'indium, de titane, de chrôme, de fer, de cobalt et elles peuvent être dopées, par exemple au fluor, ou non dopées.

A titre d'exemple, on peut citer comme composés métalliques, du difluorure de dibutyl étain décrit dans la publication européenne de brevet 0 039 256, de l'oxyde de dibutyl étain, des acétyl acétonates métalliques, du titanate de méthyle, etc...

Cette installation comporte une trémie 1 de stockage de la poudre 2 à distribuer, un mélangeur 10 dans lequel est réalisé le mélange de poudre 2 avec un gaz, en général l'air, en vue de constituer la suspension aussi homogène que possible de poudre dans le gaz, une canalisation principale d'admission 11 acheminant la suspension à la sortie du mélangeur 10, un répartiteur 30 subdivisant la veine unique de suspension amenée par la canalisation 11 en une pluralité de veines secondaires, une pluralité de conduits secondaires 31 véhiculant les veines secondaires de suspension de poudre dans le gaz, une buse de distribution 50, alimentée en suspension de poudre dans le gaz en différents points de sa longueur par les différents conduits secondaires 31, qui projette sur toute la largeur d'un substrat 52, tel une plaque de verre ou un ruban continu de verre en translation, une lame 51 de poudre en suspension dans le gaz, continue d'un bout à l'autre de la buse 50 et ininterrompue dans le temps, de manière à revêtir ledit substrat 52 d'une couche 53 à propriétés électriques, optiques et/ou décoratives particulières.

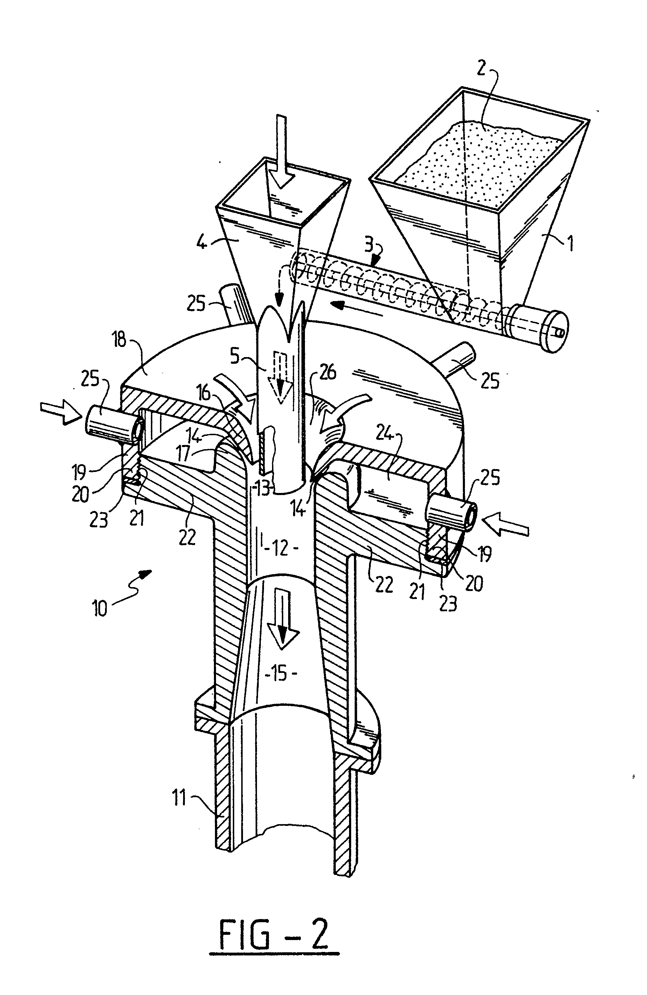

Le mélangeur 10 associé à la trémie 1 est montré plus en détail sur la fig. 2. La poudre 2 se trouve dans la trémie 1 en forme d'entonnoir et elle est extraite par le bas de ladite trémie au moyen d'une vis sans fin 3 pour être introduite dans le mélangeur 10. La poudre est reçue à l'extrémité de la vis sans fin 3 dans un récipient 4 prolongé vers le bas par un tuyau cylindrique 5. Une entrée de gaz destiné à être mélangé avec la poudre 2 est prévue au travers de la paroi supérieure du récipient 4. Généralement ce gaz est de l'air et il suffit alors que le récipient 4 ait comme montré par la fig. 2, une forme d'entonnoir ouvert à sa partie supérieure, laissant ainsi pénétrer l'air ambiant, pour réaliser un prémélange de la poudre avec l'air. Ce prémélange de poudre dans le gaz et généralement dans l'air, est conduit par le tuyau 5 jusqu'à l'entrée du mélangeur 10 proprement dit où s'effectue la préparation définitive de la suspension homogène.

Le mélangeur 10 comporte une zone tubulaire 12 de mélange, un injecteur 13 de gaz sous pression surmontant la zone de mélange 12, débouchant par une fente annulaire 14 à l'extrémité supérieure de ladite zone de mélange 12 et un segment conique 15 de stabilisation disposé sous la zone de mélange 12 et lui faisant suite. La fente annulaire 14 est limitée par deux lèvres annulaires, une lèvre supérieure 16 et une lèvre inférieure 17. La lèvre inférieure 17 est formée par le bord supérieure arrondi de la zone tubulaire de mélange 12, tandis que la lèvre supérieure 16 est un élément de la partie supérieure 18 de l'injecteur 13, qui s'avance au-dessus de la lèvre inférieure 17, la recouvre, s'incline légèrement vers le bas et qui est conformé de façon que le passage le plus étroit entre les deux lèvres 16 et 17 se situe un peu en retrait de leur extrémité.

La partie supérieure 18 de l'injecteur 13 est recourbée vers le bas et forme une partie latérale cylindrique 19 qui possède à l'intérieur de son bord inférieur un filetage 20, ce qui permet de la visser sur un filetage complémentaire 21 en bordure d'une plateforme annulaire 22 disposée à l'extérieur de la partie supérieure de la zone tubulaire de mélange 12, solidarisant ainsi l'injecteur 13 et le reste du mélangeur 10. Un joint torique 23 d'épaisseur ajustable est intercalé entre la base de la partie latérale cylindrique 19 et le bord de la plateforme 22. En modifiant l'épaisseur de ce joint, on fait varier la largeur de la fente annulaire 14. La partie supérieure 18 de l'injecteur 13 et la plateforme annulaire 22 réservent entre elles une cavité torique 24, alimentée en gaz sous pression, air comprimé en général, par des tuyaux radiaux 25, branchés sur une source de gaz sous pression non représentée, de préférence régulièrement répartis sur sa périphérie et éventuellement reliés entre eux par une canalisation torique non représentée également. Cette cavité 24 débouche à l'extrémité supérieure de la zone de mélange 12 par la fente annulaire 14 et émet un jet annulaire de gaz. La zone de mélange 12 se prolonge vers le bas par le segment 15 qui va en s'élargissant jusqu'à sa liaison avec la canalisation primaire d'admission 11. Le tuyau 5 issu du récipient 4 où s'effectue un prémélange de poudre avec le gaz pénètre dans l'injecteur 13 jusqu'à affleurer le niveau de l'injection du gaz sous pression par la fente annulaire 14. La lèvre supérieure 16 a un diamètre supérieur au diamètre du tuyau 5, si bien qu'un espace 26 est réservé autour du tuyau 5 pour l'entrée d'un gaz par aspiration. Dans la mesure où le gaz de la suspension est de l'air, cet espace 26 est en communication avec l'atmosphère; dans les autres cas, cet espace est surmonté par une chambre non représentée remplie du gaz désiré.

Grâce au soufflage au travers de la fente annulaire 14, des turbulence sont crées, un brassage intensif de la poudre et du gaz se produit dans la zone de mélange 12, du gaz extérieur est aspiré au travers de l'espace 26, la suspension est accelérée vers le bas en direction du segment conique 15 puis de la canalisation principale 11.

Cette canalisation 11 a de préférence une longueur relativement importante, au moins de l'ordre de 30 fois son diamètre pour améliorer encore l'homogénéité de la suspension.

Un mélange relativement homogène arrive donc avec une vitesse élevée à l'entrée du répartiteur 30.

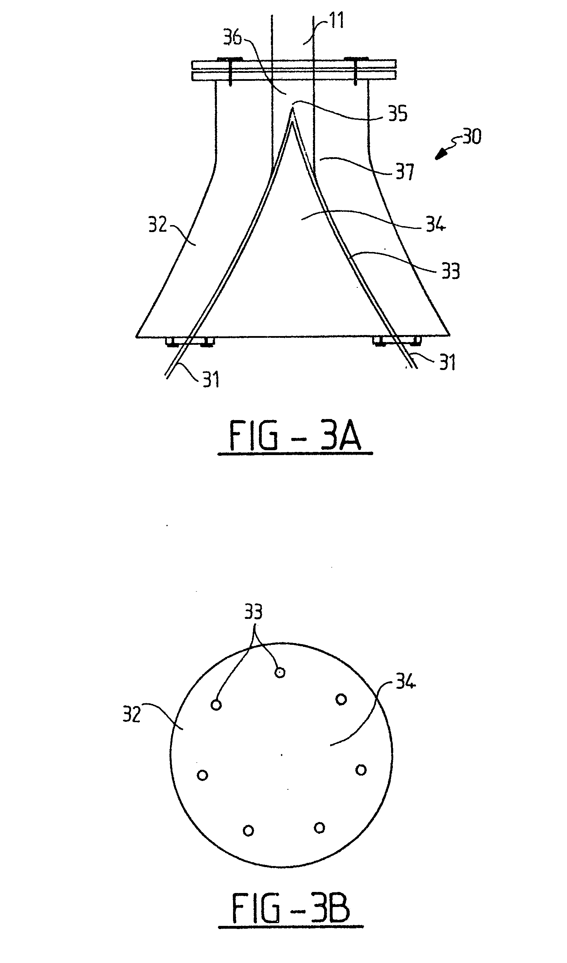

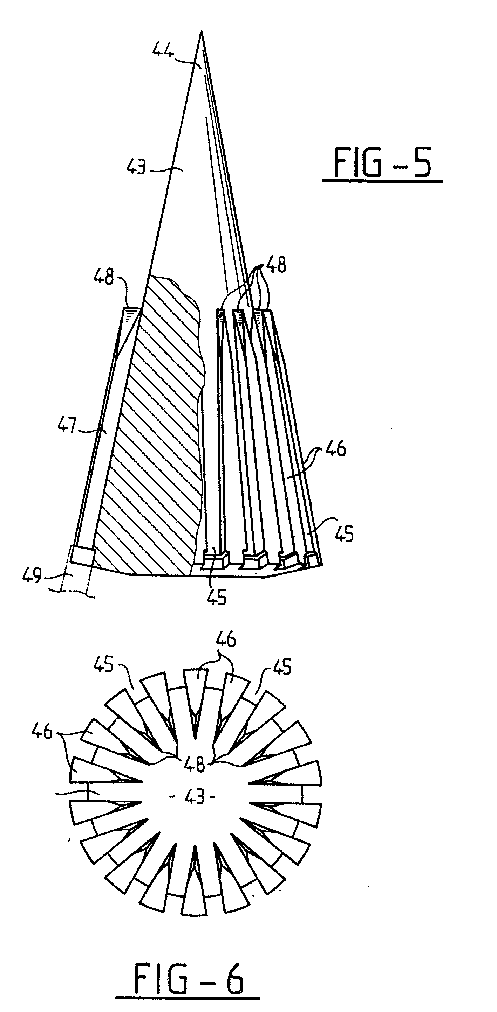

Différentes variantes d'un répartiteur 30 sont illustrées en détail sur les fig. 3 à 6.

Les fig. 3 montrent une première variante de répartiteur 30, constituée d'un volume 32, par exemple un cône, mais différents autres volumes sont possibles, dans lesquels sont percés une pluralité de canaux cylindriques identiques tels que 33 répartis en faisceau sur la surface latérale d'un cône 34 droit à section circulaire et qui convergent à la pointe o à proximité de la pointe 35 dudit cône 34. Ces canaux 33 se rassemblent près de la pointe du cône pour former une entrée unique 36 ayant même section que la totalité des canaux 33, percée dans le volume 32, et qui chapeaute la pointe 35 du cône 34, dans l'axe dudit cône 34. Cette entrée 36 est de section circulaire pour être reliée à la canalisation principale d'admission 11 issue du mélangeur 10, dans le prolongement de ladite canalisation. Pour éviter tout brusque changement de direction, qui entrainerait notamment un encrassement, l'angle au sommet du cône 34 est avantageusement inférieur à 25° et de préférence inférieur à 22° et l'entrée 36 à sa jonction avec les canaux 33 à la pointe du cône s'évase légèrement suivant un hyperboloïde 37. L'extrémité de chaque canal 33 qui débouche du côté de la base du cône 34 comme montré fig. 3B est branchée sur un des conduits secondaires 31. Pour des commodités de réalisation, les canaux 33 sont cylindriques, donc de section constante, mais ils pourraient également avoir une section légèrement et régulièrement rétrécie en allant du haut vers le bas.

La réalisation d'un tel répartiteur 30 est délicate d'autant plus délicate que le nombre de canaux 33 est plus important et que la longueur des canaux percée au travers du volume 32 est plus grande; toute imperfection dans le perçage, dans la convergence du faisceau de canaux 33 risquant d'altérer l'équirépartition de la suspension.

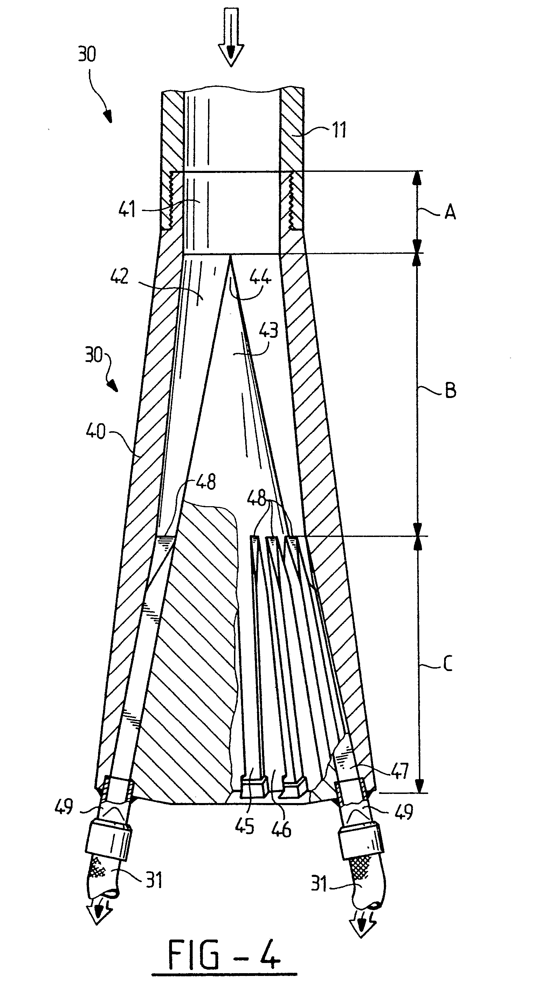

En conséquence, l'invention propose une autre variante de répartiteur 30 plus facile à fabriquer, acceptant n'importe quel nombre de canaux 33, n'importe quelles dimensions, réalisable non plus par perçage mais par fraisage. Cette autre variante est montrée sur les fig. 4 à 6.

Ce répartiteur 30 comprend un boitier 40 muni d'une entrée 41 à section circulaire branchée directement sur la canalisation primaire d'admission 11 de même section circulaire et d'un évidement 42 globalement en forme de tronc de cône droit à bases circulaires, relié à l'entrée 41 par sa base la plus petite, et il comprend également un noyau 43 conique droit à base circulaire, introduit axialement dans le boitier 40, dont la pointe 44 affleure le niveau de la petite base de l'évidement 42 en tronc de cône, dont la paroi latérale possède une pluralité de cannelures 45 identiques, délimitées par des nervures 46 et orientées suivant les génératrices du noyau 43 conique, lesdites cannelures 45 formant avec la surface interne du boitier 40 un faisceau de canaux 47 identiques.

Le boitier 40 comporte trois zones A, B et C superposées. La zone supérieure A est percée de l'entrée 41. Elle se prolonge dans la direction axiale du boitier 40 et du noyau conique 43, par la zone médiane B dans laquelle la section circulaire de l'évidement 42 s'évase continuement du haut vers le bas pour finir par épouser la forme conique du central 43. La partie supérieure de la paroi latérale du noyau 43 comprise dans cette zone B est avantageusement lisse.

Dans cette zone B, entre le noyau conique 43 et la paroi de l'évidement 42, est ainsi réservé un espace annulaire dont la section doit être en tout point égale à la section de la canalisation principale d'admission 11. L'évidement 42 dans cette zone peut être en forme de tronc de cône, mais avantageusement, pour strictement conserver la section de passage, pour supprimer tout angle sur le parcours de la suspension, pour éviter tout changement brusque de direction, il s'élargit progressivement du haut vers le bas en ayant la forme d'un hyperboloïde de révolution. Cette zone B représente environ le ⅕ de la hauteur totale du répartiteur 30.

Dans la zone C, située sous la zone B, l'évidement 42 est conique, de même conicité que le noyau central 43 et ce noyau 43 possède des cannelures 45 délimitées par des nervures 46 qui s'appuient sur la paroi latérale de l'évidement 42, formant ainsi les canaux 47. Les nervures 46 et les cannelures 45 à profil en créneau se développent le long des génératrices du noyau conique 43. A leur extrémité supérieure les nervures 46 s'achèvent en pointe et forment des biseaux 48 de façon à éviter des arêtes perturbatrices sur le trajet de la suspension. Ces canaux 47 ont avantageusement une section carrée constante, d'une part facilement réalisable par fraisage, d'autre part facilement transformable en une section circulaire capable d'être reliée aux conduits secondaires 31 eux-mêmes circulaires. Toutefois, bien que compliquant la fabrication du répartiteur, une section des canaux 47 régulièrement et légèrement décroissante en allant vers le bas est aussi possible.

A l'extrémité de chaque canal 47 est prévue une pièce de raccordement 49 établissant la liaison entre le répartiteur 30 et le conduit secondaire 31. Ce répartiteur 30 dans sa seconde variante est également destiné à être disposé verticalement, avec l'axe vertical du boitier et du noyau conique 43 dans le prolongement de l'entrée 41 et de la canalisation d'admission 11. Comme pour le répartiteur 30 selon la première variante, des déflexions trop importantes de la veine de produit à véhiculer sont à éviter. Ainsi une déviation supérieure à 25° et avantageusement 22° ne devra pas exister sur l'installation et en particulier sur le répartiteur 30.

Ainsi toute déflexion trop importante, toute rencontre avec une arête sont évitées, garantissant un écoulement optimal, tout en subdivisant la veine unique arrivant par la canalisation principale en une pluralité de veines secondaires aptes à alimenter de façon équivalente plusieurs points de la longueur d'un même dispositif de distribution par exemple une buse 50 de distribution de poudre, ou plusieurs dispositifs.

A l'intérieur de la buse 50, les flux partiels de suspension amenés par les conduits secondaires 31 se rejoignent dans la direction longitudinale de la buse si bien qu'à sa sortie il émerge un flux 51 très uniforme. La poudre, par exemple de composé métallique, se dépose sur le substrat 52, par exemple un ruban de verre chaud en déplacement uniforme continu par rapport à l'installation décrite, et sous l'effet de la chaleur se pyrolyse pour former une couche 53, par exemple d'oxyde métallique très uniforme.

Ces répartiteurs 30 peuvent être utilisés pour diviser des veines de poudres en suspension dans des gaz, de gaz seuls à fortiori, mais également de liquides chargés ou non.

Le nombre de conduits secondaires 31 équivalents peut être très important; ainsi il est tout à fait courant d'utiliser des répartiteurs 30 subdivisant une veine principale unique en environ 75 veines secondaires.

De tels répartiteurs peuvent égaglement être associés en série, une veine secondaire constituant alors la veine principale destinée à alimenter un autre répartiteur.

## Revendications

1. Installation de distribution de poudre en suspension dans un gaz, généralement de l'air, comprenant un répartiteur grâce auquel une canalisation principale d'admission (11) est subdivisée en une pluralité de conduits secondaires, caractérisée en ce que le répartiteur est formé d'un volume ayant en son sein un faisceau de canaux (33, 47) identiques répartis sur la surface latérale d'un cône (34, 43) à section circulaire, contenu dans le volume, lesdits canaux convergeant à proximité de la pointe (35, 44) du cône (34, 43) pour constituer une entrée unique (36, 41) dirigée suivant l'axe du cône (34, 43) et branchée sur la canalisation principale d'admission (11), lesdits canaux (33, 47) étant orientés suivant les génératrices du cône (34, 43) et aboutissant du côté de sa base à une pluralité d'orifices reliés chacun à un conduit secondaire 31, la canalisation principale d'admission étant précédée dans l'installation de distribution de poudre par un mélangeur (10) de la poudre dans le gaz constitué d'un injecteur (13) de gaz sous pression, prolongé vers le bas en direction de la canalisation principale d'admission par une zone tubulaire (12) et recevant à sa partie superieure une alimentation en poudre.

2. Installation selon la revendication 1, caractérisée en ce que au cours de la traversée du répartiteur la section de passage déterminée par la section de la canalisation principale (11) d'admission est au maximum conservée.

3. Installation selon la revendication 2, caractérisée en ce que la section de passage est strictement conservée.

4. Installation selon l'une quelconque des revendications 1 à 3, caractérisée ce que la direction de canalisation principale d'admission (11) forme avec l'un quelconque des canaux (33, 47) répartis sur la surface latérale du cône (33, 43) un angle au plus égal à 25° et de préférence au plus égal à 22°.

5. Installation selon l'une quelconque des revendications 1 à 4, caractérisée en ce que le répartiteur est disposé en position verticale.

6. Installation selon l'une quelconque des revendications 1 à 5, caractérisée en ce que lesdits canaux (33) sont cylindriques.

7. Installation selon l'une quelconque des revendications 1 à 5 précédentes, caractérisée en ce que le répartiteur est constitué par un boitier (40) ayant un évidement (42) globalement en forme de tronc de cône dont l'entrée (41) au travers de sa petite base communique avec la canalisation principale d'admission (11), et également par un noyau (43) en forme de cône engagé dans l'évidement (42) du boitier (40), avec la pointe du cône (43) affleurant le niveau de la petite base de l'évidement (42) du boitier (40), la paroi latérale du noyau conique (43) comportant une pluralité de cannelures (45) identiques orientées suivant les génératrices du cône (43), lesdites cannelures (45) formant avec la surface interne du boitier (40), le faisceau de canaux identiques (47).

8. Installation selon la revendication 7, caractérisée en ce que les cannelures (45) ont un profil en créneau formant ainsi des canaux (47) à section carrée.

9. Installation selon la revendication 7 ou 8, caractérisée en ce que les cannelures (45) n'apparaissent que sur une partie du noyau conique (43), laissant la pointe dudit noyau conique (43) exempte de cannelures et avantageusement lisse.

10. Installation selon la revendication 9, caractérisée en ce que la portion exempte de cannelures (45) représente environ le ⅕ de la hauteur totale du noyau conique (43).

11. Installation selon l'une des revendications 9 ou 10, caractérisée en ce que la partie de l'évidement (42) du boitier (40) recouvrant la pointe du noyau conique (43) a une forme d'hyperboloïde qui s'évase continument vers le bas et qui se raccorde d'un côté à la canalisation principale d'admission (11), de l'autre à la partie basse conique de l'évidement (42).

12. Installation selon l'une des revendications 9 à 11, caractérisée en ce que les cannelures (45) sont séparées par des nervures (46) qui se raccordent par des biseaux (48) à la partie supérieure du noyau conique (43).

13. Installation selon l'une des revendications précédentes, caractérisée en ce que l'injecteur de gaz sous pression est à jet annulaire de gaz et en ce qu'il est alimenté en poudre à sa partie supérieure par un tuyau (5).

14. Installation selon la revendication 13, caractérisée en ce qu'un espace est réservé autour du tuyau (5) d'alimentation en poudre (2) pour l'entrée d'un gaz extérieur, en général l'air ambiant, dans le mélange.

15. Installation selon l'une des revendications 13 ou 14, caractérisée en ce que la sortie du répartiteur (30) est reliée à des conduits (31) qui amènent la poudre (2) en suspension à une buse (50) de distribution à fente.

16. Installation selon l'une des revendications 13 à 15, caractérisée en ce que le mélangeur (10) est relié au répartiteur (30) par une canalisation d'admission (11) dirigée suivant l'axe dudit répartiteur (30).

17. Installation selon la revendication 16, caractérisée en ce que la canalisation (11) a une longueur qui est au moins de l'ordre de 30 fois son diamètre.

**Claims**

1. Apparatus for distribution of powder in suspension in a gas, generally air, comprising a distributor by means of which a principal admission duct (11) is subdivided into a plurality of secondary ducts, characterised in that the distributor is formed of a volume having within it a group of identical conduits (33, 47) distributed on the lateral surface of a cone (34, 43) of circular cross-section, contained in the volume, said conduits converging in the proximity of the apex (35, 44) of the cone (34, 43) to form a single inlet (36, 41) directed along the axis of the cone (34, 43) and connected to the principal admission duct (11), said conduits (33, 47) being oriented along generators of the cone (34, 43) and opening on to its base as a plurality of orifices each connected to a secondary duct 31, the principal admission duct being preceded in the powder distribution apparatus by a mixer (10) for powder in the gas comprising an injector (13) for gas under pressure, extended downwardly in the direction of the principal admission duct by a tubular zone (12) and receiving a feed of powder at its upper part.

2. Apparatus according to claim 1, characterised in that, passing through the distributor, the cross-section of passage defined by the cross-section of the principal admission duct (11) is retained constant to the maximum possible extent.

3. Apparatus according to claim 2, characterised in that the cross-section of passage is retained strictly constant.

4. Apparatus according to any one of claims 1 to 3, characterised in that the direction of the principal admission duct (11) forms, with any one of the conduits (33, 47) distributed on the lateral surface of the cone (34, 43) an angle not exceeding 25°, preferably not exceeding 22°.

5. Apparatus according to any one of claims 1 to 4, characterised in that the distributor is arranged vertically.

6. Apparatus according to any one of claims 1 to 5, characterised in that said conduits (33) are cylindrical.

7. Apparatus according to any one of claims 1 to 5, characterised in that the distributor comprises a casing (40) having an opening (42) having the overall shape of a trunk of a cone of which the inlet (41) through its smaller base communicates with the principal admission duct, and by a conical core (43) engaged in the opening (42) of the casing (40), with the apex of the cone level with the smaller base of the opening (42) of the casing (40), the lateral wall of the conical core (43) comprising a plurality of identical grooves (45) oriented along generators of the cone (43), said grooves (45) forming, with the interior surface of the casing (40), the group of identical conduits (47).

8. Apparatus according to claim 7, characterised in that the grooves (45) have a crenellated cross-section thus forming conduits (47) of square cross-section.

9. Apparatus according to claim 7 or 8, characterised in that the grooves (45) are present on only a part of the conical core (43), leaving the point of said conical core (43) free form grooves, advantageously smooth.

10. Apparatus according to claim 9, characterised in that the portion free from grooves (45) represents about ⅕ of the total height of the conical core (43).

11. Apparatus according to claim 9 or 10, characterised in that the part of the opening (42) of the casing (40) covering the point of the conical core (43) has a hyperbolic shape which opens continuously downwardly and which is connected on one side to the principal admission duct, and on the other to the lower conical part of the opening (42).

12. Apparatus according to any one of claims 9 to 11, characterised in that the grooves (45) are separated by ribs (46) connected by bevels (48) to the upper part of the conical core (43).

13. Apparatus according to any one of the preceding claims, characterised in that the injector for gas under pressure has an annular gas jet and in that it is fed with powder at its upper part by a pipe (5).

14. Apparatus according to claim 13, characterised in that a space is left around the pipe (5) for feed of powder (2) for entry of gas from the exterior, generally ambient air, into the mixture.

15. Apparatus according to claim 13 or 14, characterised in that the outlet of the distributor (30) is connected to ducts (31) which bring the powder (2) in suspension to a slot distribution nozzle (50).

16. Apparatus according to any one of claims 13 to 15, characterised in that the mixer (10) is connected to the distributor (30) by an admission conduit (11) directed along the axis of said distributor (30).

17. Apparatus according to claim 16, characterised in that the admission conduit (11) has a length which is at least of the order of 30 times its diameter.


**Patentansprüche**

1. Vorrichtung zur Verteilung von sich in Suspension in einem Gas, im wesentlichen Luft, befindlichen Pulver, mit einem Verteiler, mit welchem eine Hauptzuführungsleitung (11) in eine Anzahl von sekundären Leitungen aufgeteilt wird, dadurch gekennzeichnet, dass der Verteiler aus einem Gehäuse (32) gebildet ist, das in seinem Inneren ein Bündel von identisch ausgebildeten Kanälen (33, 47) aufweist, welche auf der Mantelfläche eines im Gehäuse angeordneten Kegels (34, 43) mit kreisförmigem Querschnitt verteilt sind und in der Nähe der Spitze (35, 44) des Kegels (34, 43) zur Bildung eines einzigen Einlasses (36, 41) zusammenlaufen, welcher mit der Achse des Kegels (34, 43) ausgerichtet ist und an der Hauptzuführungsleitung (11) anschliesst, wobei die Kanäle (43, 47) längs der Erzeugenden des Kegels (34, 43) ausgerichtet sind und zur Basis hin in eine Anzahl von Öffnungen münden, die jede mit einer Sekundärleitung (31) verbunden ist und wobei der Hauptzuführungsleitung in der Pulververteilvorrichtung ein Pulver/Gas/Mischer (10) vorgeschaltet ist, der von einem Injektor (13) für unter Druck stehendes Gas gebildet ist, welcher nach unten in Richtung der Hauptzuführungsleitung durch eine rohrförmige Zone (12) verlängert ist und an seinem oberen Abschnitt eine Speiseeinrichtung für das Pulver aufweist.

2. Vorrichtung nach Anspruch 1, dadurch gekennzeichnet, dass über den Durchgang des Verteilers der durch den Querschnitt der Hauptzuführungsleitung (11) bestimmte Durchgangsquerschnitt maximal gehalten wird.

3. Vorrichtung nach Anspruch 2, dadurch gekennzeichnet, dass der Durchgangsquerschnitt genau eingehalten wird.

4. Vorrichtung nach einem der Ansprüche 1 bis 3, dadurch gekennzeichnet, dass die Richtung der Hauptzuführungsleitung (11) mit irgendeinem der auf der Mantelfläche des Kegels (33, 43) verteilten Kanäle (33, 47) einen Winkel von höchstens gleich 25° und vorzugsweise von höchstens gleich 22° bildet.

5. Vorrichtung nach einem der Ansprüche 1 bis 4, dadurch gekennzeichnet, dass der Verteiler in vertikaler Richtung angeordnet ist.

6. Vorrichtung nach einem der Ansprüche 1 bis 5, dadurch gekennzeichnet, dass die Kanäle (33) zylindrisch ausgebildet sind.

7. Vorrichtung nach einem der Ansprüche 1 bis 5, dadurch gekennzeichnet, dass der Verteiler von einem Gehäuse (40) mit einem Hohlraum (42) im wesentlichen in Form eines Kegelstumpfes gebildet ist, dessen Einlass (41) über der kleinen Basis des Kegelstumpfes mit der Hauptzuführungsleitung (11) in Verbindung steht und der ferner einen im Hohlraum (42) des Gehäuses (40) angeordneten Kern (43) in Form eines Kegels aufweist, dessen Spitze sich in Höhe der kleinen Basis des Hohlraumes (42) des Gehäuses (40) befindet, wobei die Seitenwand des konischen Kerns (43) eine Anzahl von identischen Rillen (45) aufweist, welche längs der Erzeugenden des Kegels (43) gerichtet sind und mit der Innenfläche des Gehäuses (40) das Bündel von identischen Kanälen (47) bilden.

8. Vorrichtung nach Anspruch 7, dadurch gekennzeichnet, dass die Rillen (45) ein zinnenartiges Profil aufweisen, so dass Kanäle (47) mit viereckigem Querschnitt gebildet sind.

9. Vorrichtung nach Anspruch 7 oder 8, dadurch gekennzeichnet, dass die Rillen (45) sich nur auf einem Teil des konischen Kerns (43) erstrecken und die Spitze des konischen Kerns (43) von Rillen freigehalten und vorzugsweise glatt ausgebildet ist.

10. Vorrichtung nach Anspruch 9, dadurch gekennzeichnet, dass der von Rillen (45) freie Abschnitt etwa ein Fünftel der Gesamthöhe des konischen Kerns (43) beträgt.

11. Vorrichtung nach Anspruch 9 oder 10, dadurch gekennzeichnet, dass der die Spitze des konischen Kerns (43) überdeckende Teil des Hohlraums (42) des Gehäuses (40) die Form eines Hyperboloids aufweist, welches sich kontinuierlich nach unten hin aufweitet und mit einer Seite an der Hauptzuführungsleitung (11) und der anderen Seite am unteren konischen Abschnitt des Hohlraums (42) anschliesst.

12. Vorrichtung nach einem der Ansprüche 9 bis 11, dadurch gekennzeichnet, dass die Rillen (45) durch Rippen (46) getrennt sind, welche durch Schrägen (48) mit dem oberen Abschnitt des konischen Kerns (43) verbunden sind.

13. Vorrichtung nach einem der vorhergehenden Ansprüche, dadurch gekennzeichnet, dass der Injektor durch einen Ringstrahlinjektor gebildet ist und dass der Injektor an seinem oberen Abschnitt über ein Rohr (5) mit Pulver versorgt wird.

14. Vorrichtung nach Anspruch 13, dadurch gekennzeichnet, dass um das Rohr (5) für die Zufuhr an Pulver ein Zwischenraum für die Zufuhr von Gas aus der Umgebung, insbesondere Umgebungsluft in den Mischer vorgesehen ist.

15. Vorrichtung nach Anspruch 13 oder 14, dadurch gekennzeichnet, dass der Auslass des Verteilers (30) mit Leitungen (31) verbunden ist, die das in Suspension befindliche Pulver (2) einer Schlitzdüse (50) für die Verteilung zuführen.

16. Vorrichtung nach einem der Ansprüche 13 bis 15, dadurch gekennzeichnet, dass der Mischer (10) mit dem Verteiler (30) durch eine längs der Achse des Verteilers (30) ausgerichtete Zuführleitung (11) verbunden ist.

17. Vorrichtung nach Anspruch 16, dadurch gekennzeichnet, dass die Leitung (11) eine Länge aufweist, die mindestens dem 30fachen ihres Durchmessers entspricht.

## FIG -1

## FIG – 2

## FIG – 3A

## FIG – 3B

FIG - 4

FIG-5

FIG-6